# EUROPÄISCHE PATENTANMELDUNG

(11) **EP 1 767 331 A1**
(43) Veröffentlichungstag der Anmeldung: **28.03.2007**
(21) Anmeldenummer: 06016689.9
(22) Anmeldetag: 10.08.2006
(51) Int. Cl.: B29C 45/46, B29C 45/18

(54) **Vorrichtung zum Spritzgiessen für Materialzufuhr mit Kartuschen**

(30) Priorität: 26.09.2005 DE 102005046032
(71) Anmelder: Reinhardt Technik Gmbh & Co, 58566 Kierspe (DE)
(72) Erfinder: Hornig, Wolfgang, 58566 Kierspe (DE); Knecht, Bernd Johann, 58566 Kierspe (DE)
(74) Vertreter: Dörner, Lothar

(57) **Zusammenfassung**

Die Erfindung betrifft eine Vorrichtung zum Spritzgießen für zwei- und mehrkomponentige Werkstoffe, insbesondere für kleine Schussgewichte, mit einem Gehäuse (1), umfassend eine Materialaufgabe, einen Mischraum (4) und eine Verschlussdüse (5), die über Leitungen miteinander verbunden sind. Die Materialaufgabe ist aus wenigstens zwei Kartuschenaufnahmen (3) gebildet.

Die Erfindung betrifft weiterhin ein Verfahren zum Spritzgießen, insbesondere für kleine Schussgewichte. Mehrere Kartuschen (6), die eine Werkstoffkomponente enthalten, werden über Leitungen (144) mit einem Vorratsraum (141) verbunden und mit Luftdruck beaufschlagt. In dem Vorratsraum (141) wird ein Unterdruck erzeugt, wodurch die Werkstoffkomponenten der Kartuschen (6) durch die Leitungen (154) in den Vorratsraum (141) gefördert werden. In dem Vorratsraum (141) wird anschließend ein Überdruck erzeugt, durch den die Werkstoffkomponenten einem Mischraum (4) zugeführt werden, in den die Werkstoffkomponenten mittels eines Mischers (41) vermischt werden. Das homogenisierte Werkstoffkomponentengemisch wird durch eine Verschlussdüse (5) unter Druck in ein Spritzwerkzeug eingebracht.

## Beschreibung

Die Erfindung betrifft eine Vorrichtung zum Spritzgießen für zwei- und mehrkomponentige Werkstoffe, insbesondere für kleine Schussgewichte, mit einem Gehäuse, umfassend eine Materialaufgabe, einen Mischraum und eine Verschlussdüse, die über Leitungen miteinander verbunden sind. Die Erfindung betrifft weiterhin ein Verfahren zum Spritzgießen, insbesondere für kleine Schussgewichte.

Beim Spritzgießen können in einem einzigen Arbeitsschritt fertig geformte Teile komplexer Geometrie und nahezu beliebiger Größe hergestellt werden. Dabei funktioniert die Spritzgussmaschine nach folgendem Prinzip: Kunststoffgranulat wird über einen Trichter einem Extruder zugeführt. Das Granulat wird über eine Schnecke gefördert und gleichzeitig durch Erwärmung geschmolzen. Anschließend wird der plastifizierte Kunststoff durch die Schnecke verdichtet und unter hohem Druck durch eine Düse in ein Spritzgusswerkzeug gespritzt. Durch anschließende Kühlung des Werkzeugs wird der Kunststoff wieder zum Erstarren gebracht und das fertige Spritzgussteil kann dem Spritzgusswerkzeug entnommen werden.

Bei der Verwendung von mehrkomponenten Werkstoffen erfolgt zunächst in einem vorgelagerten Arbeitsschritt die Anmischung des Werkstoffs. Hierbei werden die einzelnen Komponenten einem Mischer zugeführt, der diese zu einem homogenen Gemisch vermengt. Der so erzielte Werkstoff wird anschließend dem Extruder zugeführt.

Das vorbekannte Verfahren weist den Nachteil auf, dass es auf Grund des zusätzlichen Arbeitsschritts aufwandsintensiv ist. Darüber hinaus hat jeder Materialwechsel einen hohen Materialverlust zur Folge, da der Extruder zunächst von dem anhaftenden Material befreit werden muss. Insbesondere bei hochwertigen Werkstoffen, wie sie beispielsweise bei medizintechnischen Anwendungen zum Einsatz kommen, ist dies ein erheblicher Kostenfaktor.

Hier will die Erfindung Abhilfe schaffen. Der Erfindung liegt die Aufgabe zu Grunde, eine Vorrichtung zum Spritzgießen für zwei- und mehrkomponentige Werkstoffe zu schaffen, bei der die Mischung und der Spritzguss innerhalb eines Arbeitsschritts ermöglicht ist und bei der darüber hinaus der Werkstoffverlust bei einem Materialwechsel minimiert ist. Gemäß der Erfindung wird diese Aufgabe dadurch gelöst, dass die Materialaufgabe aus wenigstens zwei Kartuschenaufnahmen gebildet ist.

Mit der Erfindung ist eine Vorrichtung zum Spritzgießen für zwei- und mehrkomponentige Werkstoffe geschaffen, bei der die Mischung und der Spritzguss innerhalb eines Arbeitsschritts ermöglicht ist und bei der darüber hinaus der Werkstoffverlust bei einem Materialwechsel minimiert ist.

In Weiterbildung der Erfindung ist jede Kartuschenaufnahme über eine Leitung mit einem Vorratsraum verbunden, in dem eine verschiebbare Dosiernadel mündet. Hierdurch ist eine genaue Materialdosierung ermöglicht.

In Ausgestaltung der Erfindung sind die Innendurchmesser der Leitungen entsprechend dem Mischungsverhältnis der Kartuschenmaterialien ausgeführt: Hierdurch ist eine exakte Einstellung des Mischungsverhältnisses ermöglicht.

Vorteilhaft sind die Dosiernadeln mit einer Antriebsstange verbunden, über die sie verschiebbar sind. Hierdurch ist die gleichzeitige Dosierung der Werkstoffkomponenten über eine Antriebsstange ermöglicht.

In weiterer Ausgestaltung der Erfindung ist an wenigstens einem Vorratsraum ein Druckaufnehmer vorgesehen. Hierdurch ist die Kontrolle und Steuerung der Druckverhältnisse im Vorratsraum ermöglicht.

Bevorzugt ist an den Kartuschenaufnahmen ein Rückschlagventil vorgesehen. Hierdurch ist ein ungewollter Rückfluss von Werkstoffkomponenten vermieden.

Bevorzugt ist zwischen den Vorratsräumen und dem Mischraum jeweils ein Rückschlagventil vorgesehen. Hierdurch ist die definierte Materialzufuhr in den Mischraum sichergestellt.

In weiterer Ausgestaltung der Erfindung ist in wenigstens einer Kartuschenaufnahme eine Füllstandskontrolle vorgesehen. Hierdurch ist die stetige Kontrolle des Materialvorrats sichergestellt. Bevorzugt erfolgt die Füllstandskontrolle über einen Reedkontakt.

In Ausgestaltung der Erfindung ist in dem Mischraum ein Statikmischer vorgesehen. Hierdurch ist eine zuverlässige und robuste Mischeinrichtung erzielt.

Vorzugsweise ist der Mischraum mit einer Kühleinrichtung versehen. Hierdurch ist einer Überhitzung des Materials durch exotherme chemische Reaktionen entgegengewirkt.

In weiterer Ausgestaltung der Erfindung sind das Gehäuse sowie die Antriebsstange und die Verschlussdüse derart ausgebildet, dass die Vorrichtung an Stelle der Spritzeinheit einer Spritzgießmaschine in diese einbaubar ist. Hierdurch ist eine einfache Umrüstung einer Spritzgießmaschine ohne das Erfordernis zusätzlicher Bauteile ermöglicht.

Der Erfindung liegt weiterhin die Aufgabe zu Grunde, ein Verfahren zum Spritzgießen, insbesondere für kleine Schussgewichte zu schaffen, bei dem die Mischung und der Spritzguss innerhalb eines Arbeitsschritts erfolgt und bei dem darüber hinaus der Werkstoffverlust bei einem Materialwechsel minimiert ist. Erfindungsgemäß wird diese Aufgabe dadurch gelöst, dass mehrere Kartuschen, die eine Werkstoffkomponente enthalten, über Leitungen mit einem Vorratsraum verbunden werden, in dem im Vorratsraum ein Unterdruck erzeugt wird, wodurch die Werkstoffkomponenten der Kartuschen durch die Leitungen in den Vorratsraum gefördert werden, in dem Vorratsraum anschließend ein Überdruck erzeugt wird, durch den die Werkstoffkomponenten einem Mischraum zugeführt werden, in dem die Werkstoffkomponenten mittels eines Mischers vermischt werden, und das homogenisierte Werkstoffkomponentengemisch durch eine Verschlussdüse unter Druck in ein Spritzwerkzeug eingebracht wird.

Mit der Erfindung ist ein Verfahren zum Spritzgießen für zwei- und mehrkomponentige Werkstoffe geschaffen, bei dem die Mischung und der Spritzguss innerhalb eines Arbeitsschritts erfolgen und bei dem darüber hinaus der Werkstoffverlust bei einem Materialwechsel minimiert ist.

In Weiterbildung der Erfindung wird der Unter- bzw. Überdruck in dem Mischraum durch eine translatorische Bewegung einer in den jeweiligen Vorratsraum ragenden Dosiernadel erzeugt. Hierdurch ist eine gleichmäßige Druckänderung in den Vorratsräumen erzielt.

Bevorzugt wird das Werkstoffkomponentengemisch während der Homogenisierung in dem Statikmischer gekühlt. Hierdurch ist einer Überhitzung des Werkstoffkomponentengemischs durch exotherme chemische Reaktionen verhindert.

In Ausgestaltung der Erfindung wird das Mischungsverhältnis der durch die Kartuschen zugeführten Werkstoffkomponentenmengen durch unterschiedliche Durchmesser der Dosiernadeln eingestellt. Hierdurch ist eine zuverlässige Einstellung des Mischungsverhältnisses ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

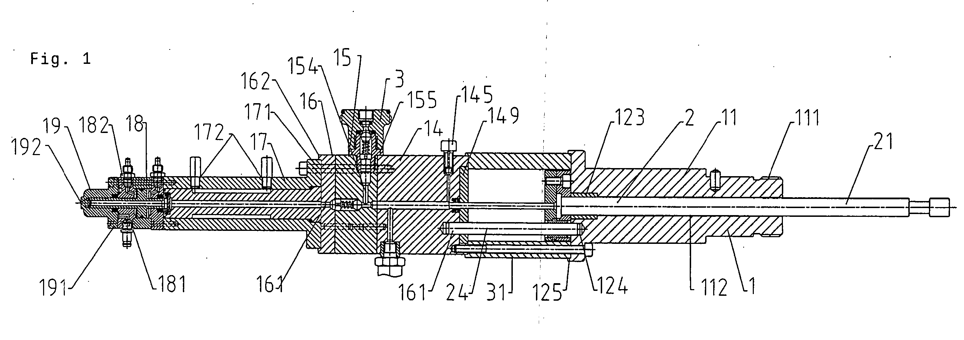

- Fig. 1: eine Vorrichtung zum Spritzgießen im Längsschnitt;

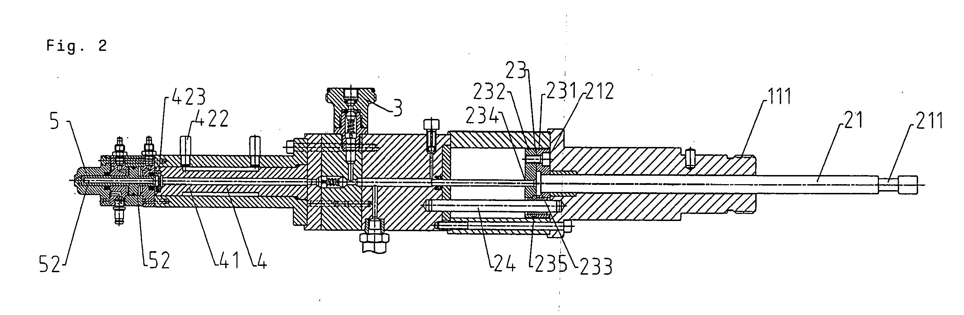

- Fig. 2: eine Vorrichtung zum Spritzgießen in einer anderen Ausgestaltung im Längsschnitt und

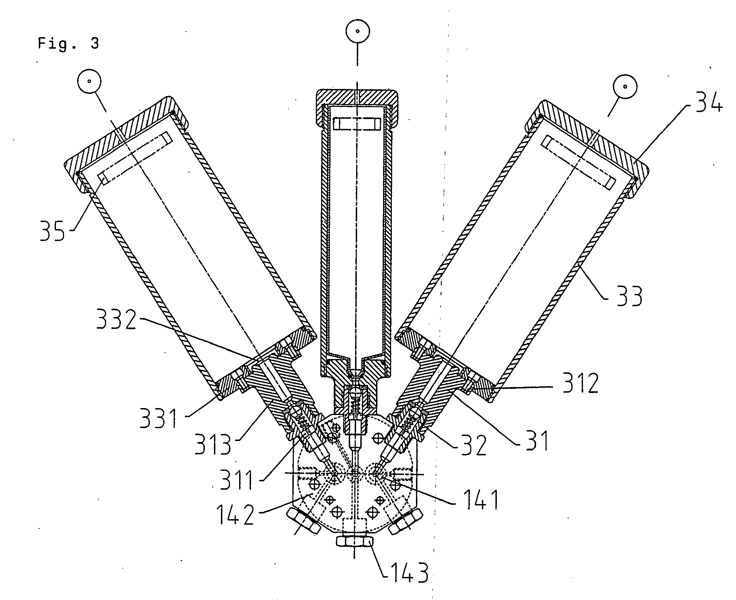

- Fig. 3: den Schnitt entlang der Linie I-I in Fig. 1 in der Ansicht von links.

Die als Ausführungsbeispiel gewählte Vorrichtung zum Spritzgießen für zwei- und mehrkomponentige Werkstoffe besteht aus einem Gehäuse 1, einer Hubvorrichtung 2, einer Kartuschenaufnahme 3, einer Mischeinheit 4 sowie einer Verschlussdüse 5.

Das Gehäuse 1 ist im Wesentlichen rotationssymmetrisch ausgeführt und aus neun Gehäuseteilen 11 bis 19 gebildet. Das Gehäuseteil 11 ist weitgehend zylindrisch ausgeführt. An seiner nach außen gerichteten Seite ist eine Vorrichtungsaufnahme 111 zum Einbau anstelle der Spritzeinheit eine Spritzgießmaschine vorgesehen. Entlang seiner Rotationsachse ist in das Gehäuseteil 11 eine Bohrung 112 zur Aufnahme der Antriebsstange 21 eingebracht. An seiner der Vorrichtungsaufnahme 111 entgegengesetzten Seite ist an dem Gehäuseteil 11 ein Gehäuseteil 12 angeordnet. Das Gehäuseteil 12 ist weitgehend als kreisrunde Scheibe ausgebildet, an deren dem Gehäuseteil 11 zugewandten Seite ein Zylinderstück angeformt ist, dessen Außendurchmesser dem Außendurchmesser des Gehäuseteils 11 entspricht. Entlang seiner Rotationsachse ist in das Gehäuseteil 12 eine Bohrung 121 eingebracht, dessen Durchmesser der Bohrung 112 des Gehäuseteils 11 entspricht und die mit der Bohrung 112 fluchtet. An seiner dem Gehäuseteil 11 zugewandten Seite ist in den zylinderförmigen Abschnitt fluchtend zur Bohrung 121 eine durchmesservergrößerte Bohrung 122 eingebracht. In der durchmesservergrößerten Bohrung 122 ist eine Hülse 123 angeordnet, deren Innendurchmesser dem Innendurchmesser der Bohrungen 112 und 121 entspricht und die mit diesen fluchtet. Parallel zu seiner Rotationsachse sind in dem Gehäuseteil 12 weiterhin Bohrungen zur Aufnahme von Befestigungsschrauben vorgesehen. Weiterhin ist an seiner dem Gehäuseteil 11 abgewandten Seite in das Gehäuseteil 12 parallel zur Rotationsmittelachse eine Bohrung 124 zur Aufnahme der Führungswelle 24 vorgesehen. An derselben Seite ist umlaufend an dem scheibenförmigen Abschnitt des Gehäuseteils 12 ein Rand 125 zur Aufnahme des Gehäuseteils 13 vorgesehen.

Das Gehäuseteil 13 ist als Hohlzylinder ausgeführt. In seine Wandung sind parallel zu dessen Rotationsachse Bohrungen 31 zur Aufnahme von Befestigungsschrauben eingebracht. Weiterhin ist an dem Gehäuseteil 13 an seiner dem Flanschstück 12 entgegengerichteten Seite ein umlaufender Rand 32 zur Aufnahme des Gehäuseteils 14 vorgesehen.

Das Gehäuseteil 14 ist weitgehend als Vollzylinder ausgeführt. Entlang seiner Rotationsachse sind parallel zueinander drei Bohrungen 141 eingebracht, wobei die mittlere der drei Bohrungen zentriert zur Rotationsmittelachse angeordnet ist. Orthogonal zu den Bohrungen 141 ist jeweils eine Bohrung 142 angeordnet, die in der Bohrung 141 mündet. An ihrem der Bohrung 141 entgegengesetzten Ende mündet die Bohrung 142 in eine Aufnahme für einen Druckaufnehmer 143. An seiner den Bohrungen 142 entgegengesetzten Seite ist orthogonal zur Bohrung 141 in das Gehäuseteil 14 eine weitere Bohrung 144 angeordnet, die in die Bohrung 141 mündet. An ihrem der Bohrung 141 entgegengesetzten Ende mündet die Bohrung 144 in eine Aufnahme für die Entlüftung 145. Des weiteren ist parallel zu seiner Rotationsmittelachse in das Gehäuseteil 14 an seiner dem Gehäuseteil 13 zugewandten Seite eine Bohrung 146 zur Aufnahme der Führungswelle 24 vorgesehen. An ihren dem Gehäuseteil 13 zugewandten Enden sind an den Bohrungen 141 Aufnahmen für eine Dichtung 147 eingebracht. Eine an seiner dem Gehäuseteil 13 zugewandten Seite ist an das Gehäuseteil 14 umlaufend ein Rand 148 angeordnet, der eine Scheibe 149 aufnimmt, welche mittig mit einer Bohrung versehen ist, die mit der Bohrung 141 fluchtet. An seinem der Scheibe 149 entgegengerichteten Seite ist ein Gehäuseteil 15 angeordnet.

Das Gehäuseteil 15 ist weitgehend als Vollzylindern ausgeführt. Entlang seiner Rotationsachse sind parallel zueinander in das Gehäuseteil 15 drei Leitungen 151 eingebracht, die mit den Leitungen 141 des Gehäuseteils 14 fluchten. An ihrem dem Gehäuseteil 14 entgegengerichteten Ende münden die Leitungen 151 in Ventilsitze 152, in denen jeweils ein Rückschlagventil 153 angeordnet ist. Orthogonal zu den Leitungen 151 ist in das Gehäuseteil 15 jeweils eine Leitung 154 eingebracht, die einerseits in eine Leitung 151 und andererseits in einen Kartuschensitz 155 münden. Weiterhin sind in dem Gehäuseteil 15 parallel zur Rotationsachse Bohrungen zur Aufnahme von Befestigungsschrauben vorgesehen. An seiner dem Gehäuseteil 15 entgegengerichteten Seite ist an dem Gehäuseteil 15 das Gehäuseteil 16 angeordnet.

Das Gehäuseteil 16 ist im Wesentlichen als Vollzylindern ausgeführt. Entlang seiner Rotationsachse ist in das Gehäuseteil 16 eine Leitung 161 mit im Wesentlichen ovalem Querschnitt eingebracht. Die Leitung 161 ist derart ausgebildet, dass alle drei Leitungen 151 in diese Leitung 161 münden. Weiterhin sind in das Gehäuseteil 16 parallel zu seiner Rotationsmittelachse Bohrungen zur Aufnahme von Befestigungsschrauben vorgesehen. An seiner dem Gehäuseteil 15 entgegengerichteten Seite ist an dem Gehäuseteil 16 umlaufend ein Rand 162 zur Aufnahme des Gehäuseteils 17 angeordnet.

Das Gehäuseteil 17 ist weitgehend als Hohlzylinder ausgeführt. An seiner dem Gehäuseteil 16 zugewandten Seite ist an dem Gehäuseteil 17 ein Flansch 171 vorgesehen. Der Flansch 171 weist Bohrungen zur Verschraubung mit den Gehäuseteilen 16, 15 und 14 auf. In die Wandung des Gehäuseteils 17 sind orthogonal zur Rotationsmittelachse parallel zueinander zwei Anschlusssitze 172 zum Anschluss an ein Kühlsystem vorgesehen. An seiner dem Gehäuseteil 16 entgegengerichteten Seite ist an dem Gehäuseteil 17 das Gehäuseteil 18 angeordnet.

Das Gehäuseteil 18 ist als Hohlzylinder ausgeführt. Zum Anschluss von Pneumatikleitungen sind außen in der Wandung des Gehäuseteils 18 Gewindebohrungen 181 eingebracht, in die Pneumatikanschlüsse 182 eingeschraubt sind.

An seiner dem Gehäuseteil 17 entgegengerichteten Seite ist an das Gehäuseteil 18 das Gehäuseteil 19 angeordnet.

Das Gehäuseteil 19 ist weitgehend hohlzylindrisch ausgeführt. An seiner dem Gehäuseteil 18 zugewandten Seite ist an dem Gehäuseteil 19 ein Flansch 191 zum Anschluss an das Gehäuseteil 18 vorgesehen. An seiner dem Flansch 191 entgegengerichteten Seite ist an dem Gehäuseteil 19 eine Dichtfläche 192 angeordnet. Die Gehäuseteile 11 bis 19 sind jeweils miteinander verschraubt.

Die Hubvorrichtung 2 besteht im Wesentlichen aus einer Antriebsstange 21, an der zu dieser fluchtend drei Dosiernadeln 22 angeordnet sind. Die Anschlussstelle zwischen Antriebsstange 21 und Dosiernadeln 22 ist von einem Gleitzylinder 23 eingefasst, der über die Führungswelle 24 geführt ist.

Die Antriebsstange 21 ist vollzylindrisch ausgeführt. An ihrem dem Gehäuse 1 abgewandten Ende ist in die Antriebsstange 21 eine Kerbe 211 zur Ankopplung an den Hydraulikzylinder der Spritzeinheit einer Spritzgießmaschine eingebracht. An ihrem der Kerbe 211 gegenüberliegenden Ende ist an der Antriebsstange 21 eine Platte 212 zur Aufnahme der Dosiernadeln 22 angeordnet.

Der Gleitzylinder 23 ist aus zwei parallel zueinander angeordneten Zylinderteilen 231, 232 zusammengesetzt, die beidseitig der Platte 212 angeordnet sind und miteinander verschraubt sind. Das dem Gehäuseteil 11 zugewandte Zylinderteil 231 ist mittig mit einer Bohrung versehen, deren Innendurchmesser etwa dem Außendurchmesser der Antriebsstange 21 entspricht und die in einer Ausnehmung 233 mündet, welche die Platte 212 aufnimmt. In dem Zylinderteil 232 sind parallel zueinander drei Bohrungen 234 eingebracht, deren Innendurchmesser etwa dem Außendurchmesser der Dosiernadeln 22 entspricht und durch welchen die Dosiernadeln 22 geführt sind. Durch die Zylinderteile 231, 232 ist fluchtend zueinander parallel zu deren Mittelachse eine Bohrung 235 eingebracht, durch die die Führungswelle 24 geführt ist, welche in den Bohrungen 124 und 146 der Gehäuseteile 11, 14 gelagert ist.

Die Kartuschenaufnahme 3 ist gebildet durch ein Ansatzstück 31, das ein Rückschlagventil 32 aufnimmt, einen Kartuschenbehälter 33 und einen Deckel 34. Das Ansatzstück 31 ist weitgehend zylindrisch ausgeführt. An seinem dem Gehäuseteil 15 zugewandten Ende ist das Ansatzstück 31 durchmesserreduziert ausgeführt, so dass eine Spitze 311 gebildet ist. Innerhalb der Spitze 311 ist das Rückschlagventil 32 angeordnet. An seinem der Spitze 311 gegenüberliegenden Ende ist an dem Ansatzstück 31 ein Flansch 312 vorgesehen. Entlang seiner Rotationsmittelachse ist in das Ansatzstück 31 eine Bohrung 313 eingebracht, welche in der Spitze 311 mündet. An den Flansch 312 ist der Kartuschenbehälter 33 angeschraubt, in dessen Boden 331 zentriert eine Bohrung 332 eingebracht ist, die mit der Bohrung 313 des Ansatzstücks 31 fluchtet. An seiner dem Boden 331 entgegengerichteten Seite ist auf dem Kartuschenbehälter 33 ein Deckel 34 vorgesehen, der über Schrauben 341 mit dem Kartuschenbehälter 33 verbunden ist. Unterhalb des Deckels 34 ist in den Kartuschenbehälter 33 eine Füllstandskontrolle 35 angeordnet. Im Ausführungsbeispiel ist die Füllstandskontrolle über Reedkontakte gebildet.

Die Mischeinheit 4 ist innerhalb des Gehäuseteils 17 angeordnet. Im Ausführungsbeispiel ist die Mischeinheit 4 im Wesentlichen gebildet aus einem Statikmischer 41, der innerhalb der Leitung 421 einer Kühleinheit 42 angeordnet ist. Die Leitung 421 verläuft entlang der Rotationsachse des Gehäuseteils 17 und fluchtet mit der Leitung 161 des Gehäuseteils 16. An der Kühleinheit 42 sind Anschlüsse 422 vorgesehen, die mit den Anschlusssitzen 172 des Gehäuseteils 17 fluchten. Die Anschlüsse 422 dienen dem Zu- bzw. Ablauf des Kühlmittels. An ihrer dem Gehäuseteil 18 zugewandten Seite ist an der Mischeinheit 4 ein Ventil 423 angeordnet, an das die Verschlussdüse 5 angeschlossen ist.

Die Verschlussdüse 5 ist weitgehend hohlzylindrisch ausgebildet. Der Außendurchmesser der Verschlussdüse 5 entspricht dabei etwa dem Innendurchmesser der Leitung 421 der Mischeinheit 4. Die Verschlussdüse 5 ist in den Gehäuseteilen 18 und 19 angeordnet, wobei auf der Rotationsachse der Verschlussdüse 5 eine Leitung 52 vorgesehen ist, die mit der Leitung 421 der Kühleinheit 42 fluchtet. Im Bereich des Gehäuseteils 18 ist umlaufend an der Verschlussdüse 5 außen ein Rand 51 angeordnet. Der Rand 51 liegt an der Innenwand des Gehäuseteils 18 an.

Zum Spritzgießen mehrkomponentiger Werkstoffe werden zunächst mit den einzelnen Werkstoffkomponenten gefüllte Kartuschen 6 in die Kartuschenbehälter 33 der Kartuschenaufnahmen 3 eingeführt. An den Kartuschen 6 sind Öffnungen vorgesehen, die mit den Leitungen 313 der Kartuschenaufnahmen fluchten, so dass die Werkstoffkomponenten in die Leitungen 313 bis zum Rückschlagventil 32 fließen können. Bei den Werkstoffkomponenten handelt es sich um LSR (Liquid Silicon Rubber) Material. Anschließend wird der Deckel 34 auf den Kartuschenbehälter 33 aufgesetzt und mittels Schrauben 341 fixiert, so dass die Kartusche 6 in dem Kartuschenbehälter 33 sicher gehalten ist. Über die Füllstandskontrolle 35 ist der Füllstand der einzelnen Kartuschen entnehmbar.

Die Vorrichtung ist im Anwendungsbeispiel in eine Spritzgießmaschine an Stelle der Spritzeinheit installiert. Die Antriebsstange 21 ist dabei über die Kerbe 211 in der Aufnahme des - nicht dargestellten - Hydraulikzylinders der Spritzeinheit fixiert. Voraussetzung für den Austausch der Spritzeinheit durch die Vorrichtung ist eine hohe Präzision bei der Herstellung der Vorrichtung, insbesondere hinsichtlich ihrer Planparallelität.

Zu Beginn des Spritzvorgangs ist die Antriebsstange 21 vollständig nach vorn gefahren, so dass das Zylinderteil 232 an der Scheibe 149 anliegt; die Dosiernadeln 22 sind weitgehend in die Leitungen 141 eingefahren. Die Hubvorrichtung 2 der Antriebsstange 21 weist einen Hub von ca. 80 mm auf. Beim Zurückfahren der Antriebsstange 21 mit den daran angeordneten Dosiernadeln 22 wird in den Leitungen 141 ein Unterdruck erzeugt, wodurch die Werkstoffkomponenten der Kartuschen 6, die mit Druckluft beaufschlagt sind, in die Leitungen 141 gefördert werden. Die Rückschlagventile 32 sind geöffnet; die Rückschlagventile 153 sind geschlossen. Der in den Leitungen 141 anliegende Druck ist über die Druckaufnehmer 143 entnehmbar.

Anschließend wird die Antriebsstange 21 wieder in ihre ursprüngliche Position gefahren, wodurch das in den Leitungen 141 befindliche Material in die Mischeinheit 4 gepresst wird. Die Rückschlagventile 153 sind geöffnet. Die Rückschlagventile 32 schließen, so dass ein Materialrückfluss in die Kartuschen 6 verhindert wird. Beim Eintritt der Werkstoffkomponenten in die Leitung 421 der Mischeinheit 4 werden die Werkstoffkomponenten durch den Statikmischer 41 vermengt, wodurch ein homogenisierter mehrkomponentiger Werkstoff erzielt wird. Die bei der exothermen Reaktion der Werkstoffkomponenten auftretende Wärme wird über die Kühleinheit 42 abgeführt, so dass eine definierte Temperatur des Mehrkomponentenwerkstoffs erzielt wird. Über die Pneumatikanschlüsse 182 wird nun die Verschlussdüse 5 durch Druck auf den Rand 51 in Richtung des Gehäuseteils 17 bewegt, wodurch das Ventil 423 geöffnet wird, so dass der unter Druck in der Mischeinheit befindliche Mehrkomponentenwerkstoff durch die Verschlussdüse 5 in das - nicht dargestellte - Spritzwerkzeug eingebracht wird.

Bei einem Materialwechsel müssen lediglich die Leitungen 141, 154, 161, 421, 52 gespült werden, wodurch ein nur sehr geringer Werkstoffverlust erzielt ist.

## Patentansprüche

1. Vorrichtung zum Spritzgießen für zwei- und mehrkomponentige Werkstoffe, insbesondere für kleine Schussgewichte, mit einem Gehäuse, umfassend eine Materialaufgabe, einen Mischraum und eine Verschlussdüse, die über Leitungen miteinander verbunden sind, **dadurch gekennzeichnet, dass** die Materialaufgaben aus wenigstens zwei Kartuschenaufnahmen (3) gebildet sind.

2. Vorrichtung nach Anspruch 1, **dadurch gekennzeichnet, dass** jede Kartuschenaufnahme (3) über eine Leitung (154) mit einem Vorratsraum (141) verbunden ist, in dem eine verschiebbare Dosiernadel (22) mündet.

3. Vorrichtung nach Anspruch 1 oder 2, **dadurch gekennzeichnet, dass** die Innendurchmesser der Leitungen 154 entsprechend dem Mischungsverhältnis der Werkstoffkomponenten ausgeführt sind.

4. Vorrichtung nach einem der vorgenannten Ansprüche, **dadurch gekennzeichnet, dass** an dem Eintritt der Dosiernadel (22) in den Vorratsraum (141) eine Dichtung (147) vorgesehen ist.

5. Vorrichtung nach einem der Ansprüche 2 bis 4, **dadurch gekennzeichnet, dass** die Dosiernadeln (22) mit einer Antriebsstange (21) verbunden sind, über die sie verschiebbar sind.

6. Vorrichtung nach einem der Ansprüche 2 bis 5, **dadurch gekennzeichnet, dass** an wenigstens einem Vorratsraum (141) ein Druckaufnehmer (143) vorgesehen ist.

7. Vorrichtung nach einem der vorgenannten Ansprüche, **dadurch gekennzeichnet, dass** an den Kartuschenaufnahmen (3) ein Rückschlagventil (32) vorgesehen ist.

8. Vorrichtung nach einem der vorgenannten Ansprüche, **dadurch gekennzeichnet, dass** zwischen den Vorratsräumen (141) und dem Mischraum (4) jeweils ein Rückschlagventil (153) vorgesehen ist.

9. Vorrichtung nach einem der vorgenannten Ansprüche, **dadurch gekennzeichnet, dass** in wenigstens einer Kartuschenaufnahme (3) eine Füllstandskontrolle (35) vorgesehen ist.

10. Vorrichtung nach Anspruch 9, **dadurch gekennzeichnet, dass** die Füllstandskontrolle (35) über einen Reed-Kontakt erfolgt.

11. Vorrichtung nach einem der vorgenannten Ansprüche, **dadurch gekennzeichnet, dass** in dem Mischraum (4) ein Statikmischer (41) vorgesehen ist.

12. Vorrichtung nach einem der vorgenannten Ansprüche, **dadurch gekennzeichnet, dass** der Mischraum (4) mit einer Kühleinrichtung (42) versehen ist.

13. Vorrichtung nach einem der vorgenannten Ansprüche, **dadurch gekennzeichnet, dass** das Gehäuse (1) sowie die Antriebsstange (21) und die Verschlussdüse (5) derart ausgebildet sind, dass die Vorrichtung an Stelle der Spritzeinheit einer Spritzgießmaschine in diese einbaubar ist.

14. Verfahren zum Spritzgießen, insbesondere für kleine Schussgewichte, **dadurch gekennzeichnet, dass** mehrere Kartuschen (6), die eine Werkstoffkomponente enthalten, über Leitungen (154) mit einem Vorratsraum (141) verbunden und mit Luftdruck beaufschlagt werden, in dem Vorratsraum (141) ein Unterdruck erzeugt wird, wodurch die Werkstoffkomponenten der Kartuschen (6) durch die Leitungen (154) in den Vorratsraum (141) gefördert werden, in dem Vorratsraum (141) anschließend ein Überdruck erzeugt wird, durch den die Werkstoffkomponenten einem Mischraum (4) zugeführt werden, in dem die Werkstoffkomponenten mittels eines Mischers (41) vermischt werden, und das homogenisierte Werkstoffkomponentengemisch durch eine Verschlussdüse (5) unter Druck in ein Spritzwerkzeug eingebracht wird.

15. Verfahren nach Anspruch 14, **dadurch gekennzeichnet, dass** der Unter- bzw. Überdruck in den Mischraum (4) durch eine translatorische Bewegung einer in den jeweiligen Vorratsraum (141) ragenden Dosiernadel (22) erzeugt wird.

16. Verfahren nach Anspruch 14 oder 15, **dadurch gekennzeichnet, dass** das Werkstoffkomponentengemisch während der Homogenisierung in dem Statikmischer (41) gekühlt wird.

17. Verfahren nach einem der Ansprüche 14 bis 16, **dadurch gekennzeichnet, dass** das Mischungsverhältnis der durch die Kartuschen (6) zugeführten Werkstoffkomponentenmengen durch unterschiedliche Durchmesser der Dosiernadeln (22) eingestellt wird.
